# EUROPEAN PATENT SPECIFICATION

(11) **EP 4 152 507 B1**
(45) Date of publication and mention of the grant of the patent: **17.06.2026**
(21) Application number: 21880624.8
(22) Date of filing: 15.10.2021
(51) Int. Cl.: H01M 50/446, H01M 50/449, H01M 50/403, H01M 10/052, H01M 10/42, H01M 50/417, H01M 50/434, H01M 50/443, H01M 50/457, H01M 50/46, H01M 50/489, H01M 50/451

(54) **SEPARATOR FOR LITHIUM SECONDARY BATTERY AND METHOD FOR MANUFACTURING THE SAME**
SEPARATOR FÜR LITHIUMSEKUNDÄRBATTERIE UND HERSTELLUNGSVERFAHREN DAFÜR
SÉPARATEUR POUR BATTERIE SECONDAIRE AU LITHIUM ET SON PROCÉDÉ DE FABRICATION

(30) Priority: 16.10.2020 KR 20200134283
(43) Date of publication of application: 22.03.2023
(73) Proprietor: LG Energy Solution, Ltd., Seoul 07335 (KR)
(72) Inventor: JANG, Dae-Sung, Daejeon 34122 (KR); SUNG, Dong-Wook, Daejeon 34122 (KR); JEONG, So-Mi, Daejeon 34122 (KR)
(74) Representative: Hoffmann Eitle
(86) International application number: PCT/KR2021/014421
(87) International publication number: WO 2022/080978

(56) References cited:
- WO-A1-2018/055882
- KR-A- 20140 017 762
- KR-A- 20170 037 556
- KR-A- 20200 021 435
- KR-A- 20200 034 470
- KR-A- 20200 085 190

## Description

### TECHNICAL FIELD

The present application claims priority to Korean Patent Application No. 10-2020-0134283 filed on October 16, 2020 in the Republic of Korea.

The present disclosure relates to a separator applicable to an electrochemical device, such as a lithium secondary battery, and a method for manufacturing the same.

### BACKGROUND ART

Recently, energy storage technology has been given an increasing attention. Efforts into research and development for electrochemical devices have been actualized more and more, as the application of energy storage technology has been extended to energy for cellular phones, camcorders and notebook PC and even to energy for electric vehicles. In this context, electrochemical devices have been most spotlighted. Among such electrochemical devices, development of rechargeable secondary batteries has been focused. More recently, active studies have been conducted about designing a novel electrode and battery in order to improve the capacity density and specific energy in developing such batteries.

Among the commercially available secondary batteries, lithium secondary batteries developed in the early 1990's have been spotlighted, since they have a higher operating voltage and significantly higher energy density as compared to conventional batteries, such as Ni-MH, Ni-Cd and sulfuric acid-lead batteries using an aqueous electrolyte.

Although such electrochemical devices have been produced from many production companies, safety characteristics thereof show different signs. Evaluation and securement of safety of such electrochemical devices are very important. For example, a separator prevents a short-circuit between a positive electrode and a negative electrode and provides a channel for transporting lithium ions. Therefore, such a separator is an important element affecting the safety and output characteristics of a battery. Particularly, a polyolefin-based porous polymer substrate used conventionally as a separator for an electrochemical device shows a severe heat shrinking behavior at a temperature of 100°C or higher due to its material property and a characteristic during its manufacturing process, including orientation, thereby causing a short-circuit between a positive electrode and a negative electrode.

To solve the above-mentioned safety problem of electrochemical devices, there has been suggested a separator having a porous coating layer which is formed by coating a mixture of an excessive amount of inorganic particles with a binder polymer on at least one surface of a porous polymer substrate having a plurality of pores.

Such a porous coating layer may have pores typically formed by vapor induced phase separation or immersed phase separation. Particularly, a porous coating layer formed by vapor induced phase separation shows better quality in terms of heat shrinkage as compared to immersed phase separation. However, vapor induced phase separation has a problem in that the binder polymer contained in slurry block the pores of the porous polymer substrate during the formation of a porous coating layer.

On the other hand, immersed phase separation has an advantage in that the coating layer is solidified, while slurry is applied to a substrate at the same time, and thus provides low resistance before/after coating of a porous polymer substrate, as compared to vapor induced phase separation. In other words, there is an advantage in that the pores of the porous polymer substrate are not blocked by the binder polymer. However, the porous coating layer formed through immersed phase separation shows poor quality, particularly in terms of high-temperature heat shrinkage, as compared to vapor induced phase separation, and provides lower adhesion (Lami strength) between a separator and an electrode.

WO 2018/055882 A1 discloses a non-aqueous secondary battery separator comprising: a porous substrate; a first porous layer that is disposed on one surface of the porous substrate and contains a PVDF resin in which the content of an HFP unit is 3-20 mass% and the weight-average molecular weight is 100,000-1,500,000; and a second porous layer that is disposed on the other surface of the porous substrate and contains a PVDF resin and a resin having a glass transition temperature of 30-120°C.

KR 2020/0034470 A discloses a separator, comprising a porous polymer substrate including a plurality of pores; and a porous coating layer formed on at least one surface of the porous polymer substrate and including a plurality of inorganic particles and a binder polymer which is placed on a part or all of surfaces of the inorganic particles and which is provided to connect and fix the inorganic particles.

### DISCLOSURE

### Technical Problem

The present disclosure is designed to solve the problems of the related art, and therefore the present disclosure is directed to providing a separator, which reduces blocking of pores in a porous polymer substrate by taking an advantage of immersed phase separation, while providing improved adhesion to an electrode and improved heat shrinkage, and a method for manufacturing the separator.

### Technical Solution

In one aspect of the present disclosure, there is provided a separator for a lithium secondary battery according to any one of the following embodiments.

According to the first embodiment, there is provided a separator for a lithium secondary battery, including:
a porous polymer substrate; and
a porous coating layer formed on at least one surface of the porous polymer substrate, and including inorganic particles, a fluorine-based binder polymer and a polyvinyl acetate (PVAc) binder polymer,
wherein the porous coating layer has a structure in which the inorganic particles are dispersed in a matrix formed by the fluorine-based binder polymer and the polyvinyl acetate binder polymer, and the fluorine-based binder polymer, the polyvinyl acetate binder polymer and the inorganic particles are distributed homogeneously in the thickness direction of the porous coating layer,
the content of the inorganic particles is 70 parts by weight or more based on 100 parts by weight of the porous coating layer, and
the content of the polyvinyl acetate binder polymer is 30 parts by weight or more and less than 80 parts by weight based on 100 parts by weight of the total content of the binder polymers.

According to the second embodiment, there is provided a separator for a lithium secondary battery, including:
a porous polymer substrate; and
a porous coating layer formed on at least one surface of the porous polymer substrate, and including inorganic particles, a fluorine-based binder polymer and a polyvinyl acetate (PVAc) binder polymer,
wherein the pores in the porous coating layer are formed by mass interchange between a solvent and a non-solvent for the binder polymers,
the content of the inorganic particles is 70 parts by weight or more based on 100 parts by weight of the porous coating layer, and
the content of the polyvinyl acetate binder polymer is 30 parts by weight or more and less than 80 parts by weight based on 100 parts by weight of the total content of the binder polymers.

According to the third embodiment, there is provided the separator for a lithium secondary battery as defined in the first or the second embodiment, wherein the content of the polyvinyl acetate binder polymer may be 30-75 parts by weight based on 100 parts by weight of the total content of the binder polymers.

According to the fourth embodiment, there is provided the separator for a lithium secondary battery as defined in the second or the third embodiment, wherein the solvent may include at least one selected from N-methyl-2-pyrrolidone, dimethyl acetamide and dimethyl formamide.

According to the fifth embodiment, there is provided the separator for a lithium secondary battery as defined in any one of the second to the fourth embodiments, wherein the non-solvent may be water.

According to the sixth embodiment, there is provided the separator for a lithium secondary battery as defined in any one of the first to the fifth embodiments, wherein the fluorine-based binder polymer may have a weight average molecular weight of 100,000-1,500,000.

According to the seventh embodiment, there is provided the separator for a lithium secondary battery as defined in any one of the first to the sixth embodiments, wherein the polyvinyl acetate binder polymer may have a weight average molecular weight of 100,000-1,000,000.

According to the eighth embodiment, there is provided the separator for a lithium secondary battery as defined in any one of the first to the seventh embodiments, which may show an adhesion to an electrode (Lami strength) of 23.5 N/m (60 gf/25 mm) or more.

According to the ninth embodiment, there is provided the separator for a lithium secondary battery as defined in any one of the first to the eighth embodiments, which may show a heat shrinkage of 10% or less in at least one of the machine direction and the transverse direction, as determined after heating the separator at 150°C for 30 minutes.

In another aspect of the present disclosure, there is provided an electrochemical device according to any one of the following embodiments.

According to the tenth embodiment, there is provided an electrochemical device including a positive electrode, a negative electrode and a separator interposed between the negative electrode and the positive electrode, wherein the separator is the same as defined in any one of the above-described embodiments.

According to the eleventh embodiment, there is provided the electrochemical device as defined in the tenth embodiment, which may be a lithium secondary battery.

### Advantageous Effects

According to an embodiment of the present disclosure, it is possible to provide a separator which includes inorganic particles at a higher content as compared to the conventional separator, and uses a fluorine-based binder polymer and a polyvinyl acetate binder polymer at the same time. In this manner, it is possible to improve the adhesion to an electrode (Lami strength) and to enhance the heat resistance of the separator. In addition, it is possible to reduce blocking of the pores in a porous polymer substrate, and thus to reduce resistance in the separator.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic view illustrating the separator obtained by vapor induced phase separation according to Comparative Example.
FIG. 2 is a scanning electron microscopic (SEM) image illustrating the separator obtained by vapor induced phase separation according to Comparative Example.
FIG. 3 is a schematic view illustrating the separator obtained by immersed phase separation according to an embodiment of the present disclosure.
FIG. 4 is an SEM image illustrating the separator obtained by immersed phase separation according to an embodiment of the present disclosure.
FIG. 5 is an SEM image illustrating the surface of the separator according to Comparative Example A.

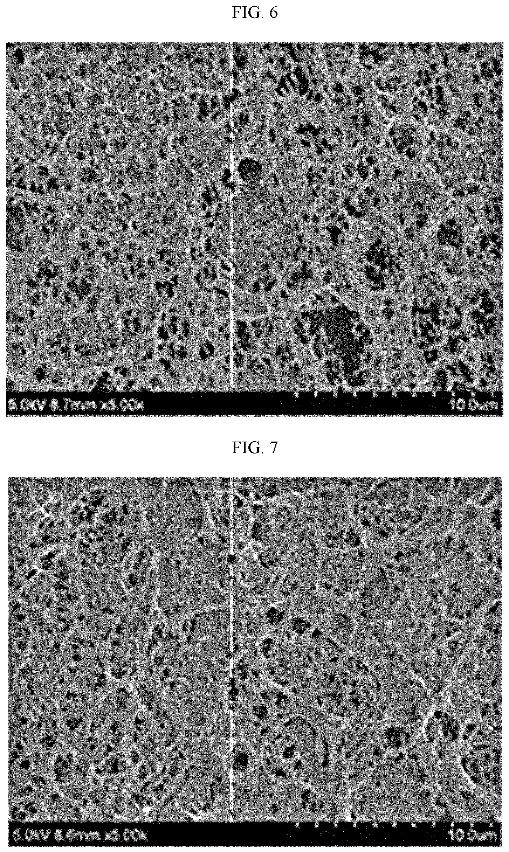

FIG. 6 is an SEM image illustrating the surface of the separator according to Reference Example B.
FIG. 7 is an SEM image illustrating the surface of the separator according to Example C.

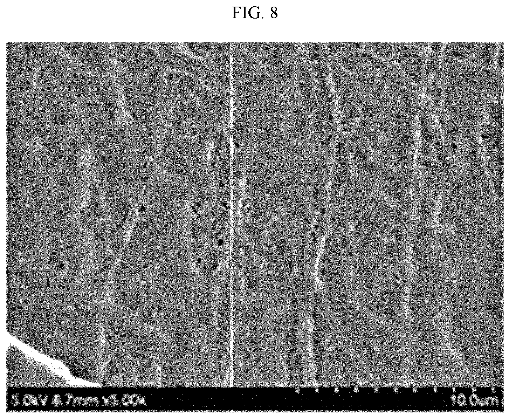

FIG. 8 is an SEM image illustrating the surface of the separator according to Comparative Example B.

### BEST MODE

Hereinafter, preferred embodiments of the present disclosure will be described in detail with reference to the accompanying drawings.

As used herein, the expression 'one portion is connected to another portion' covers not only 'a portion is directly connected to another portion' but also 'one portion is connected indirectly to another portion' by way of the other element interposed between them. In addition, 'connection' covers electrochemical connection as well as physical connection.

Throughout the specification, the expression 'a part includes an element' does not preclude the presence of any additional elements but means that the part may further include the other elements.

In addition, it will be understood that the terms 'comprises' and/or 'comprising', or 'includes' and/or 'including' when used in this specification, refer to the presence of any stated shapes, numbers, steps, operations, members, elements and/or groups thereof, but do not preclude the addition of one or more other shapes, numbers, steps, operations, members, elements and/or groups thereof.

As used herein, the terms 'approximately', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the term 'combination thereof' included in any Markush-type expression means a combination or mixture of one or more elements selected from the group of elements disclosed in the Markush-type expression, and refers to the presence of one or more elements selected from the group.

As used herein, the expression 'A and/or B' means 'A, B or both of them'.

A lithium secondary battery includes a separator interposed between a positive electrode and a negative electrode in order to prevent a physical contact between the positive electrode and the negative electrode and to prevent an electrical short-circuit. Such a separator frequently uses a polyolefin-based porous polymer substrate. In addition, a separator provided with a porous coating layer including inorganic particles and a binder polymer on at least one surface of the porous polymer substrate is used frequently in order to prevent the porous polymer substrate from heat shrinking and to enhance the adhesion to an electrode.

Herein, the porous coating layer may have a pore structure typically formed by vapor induced phase separation or immersed phase separation. The vapor induced phase separation includes applying slurry for forming a porous coating layer onto a porous polymer substrate and drying the slurry under a humidified condition. In this case, the binder polymer in the slurry migrates together with a solvent toward the surface portion of the porous coating layer to enhance the adhesion to an electrode, and pores are formed at the sites from which the solvent evaporates. Thus, according to the vapor induced phase separation, the porous coating layer may be broadly divided into a dispersed layer in which the inorganic particles and the binder polymer are dispersed homogeneously and an adhesive layer in which the binder polymer is distributed predominantly.

On the other hand, the immersed phase separation includes applying slurry for forming a porous coating layer onto a porous polymer substrate, and dipping the substrate in a coagulation bath containing a non-solvent so that pores may be formed by the mass interchange between the solvent in the slurry and the non-solvent in the coagulation bath. According to the immersed phase separation, since the solvent does not evaporate through drying, a so-called adhesive layer is not formed in the surface portion of the porous coating layer, unlike the vapor induced phase separation. In other words, the immersed phase separation provides a structure including the inorganic particles dispersed homogeneously in a binder polymer matrix.

The porous coating layer formed by the immersed phase separation shows lower adhesion to an electrode, since no adhesive layer exists, unlike the porous coating layer formed by the vapor induced phase separation. In addition, the porous coating layer formed by the immersed phase separation shows lower quality in terms of heat shrinkage, since the content of the inorganic particles is smaller as compared to the vapor induced phase separation. When the content of the inorganic particles is increased in order to improve the heat shrinkage, the adhesion to an electrode is further decreased.

Therefore, the present disclosure is directed to providing a separator obtained through the immersed phase separation and showing improved heat shrinkage and enhanced adhesion to an electrode.

In one aspect of the present disclosure, there is provided a separator for a lithium secondary battery, including:
a porous polymer substrate; and
a porous coating layer formed on at least one surface of the porous polymer substrate, and including inorganic particles, a fluorine-based binder polymer and a polyvinyl acetate (PVAc) binder polymer,
wherein the porous coating layer has a structure in which the inorganic particles are dispersed in a matrix formed by the fluorine-based binder polymer and the polyvinyl acetate binder polymer, and the fluorine-based binder polymer, the polyvinyl acetate binder polymer and the inorganic particles are distributed homogeneously in the thickness direction of the porous coating layer,
the content of the inorganic particles is 70 parts by weight or more based on 100 parts by weight of the porous coating layer, and
the content of the polyvinyl acetate binder polymer is 30 parts by weight or more and less than 80 parts by weight based on 100 parts by weight of the total content of the binder polymers.

The separator for a lithium secondary battery according to an embodiment of the present disclosure has a porous coating layer formed by the so-called immersed phase separation. In other words, the binder polymer and the inorganic particles are distributed homogeneously in the porous coating layer. In other words, the separator includes no separate adhesive layer. In the separator obtained through the immersed phase separation, since the coating layer is coagulated simultaneously with the application of the slurry, it is possible to reduce the problem of the conventional vapor induced phase separation, i.e. blocking of the pores in the porous polymer substrate, caused by the binder polymer. In addition, the separator according to an embodiment of the present disclosure includes pores formed by the exchange between a solvent and a non-solvent, and thus shows lower complexity as compared to the pores in the porous coating layer formed by the vapor induced phase separation, resulting in relatively lower resistance of the separator.

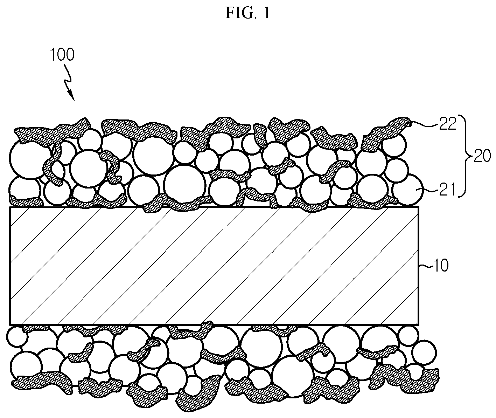

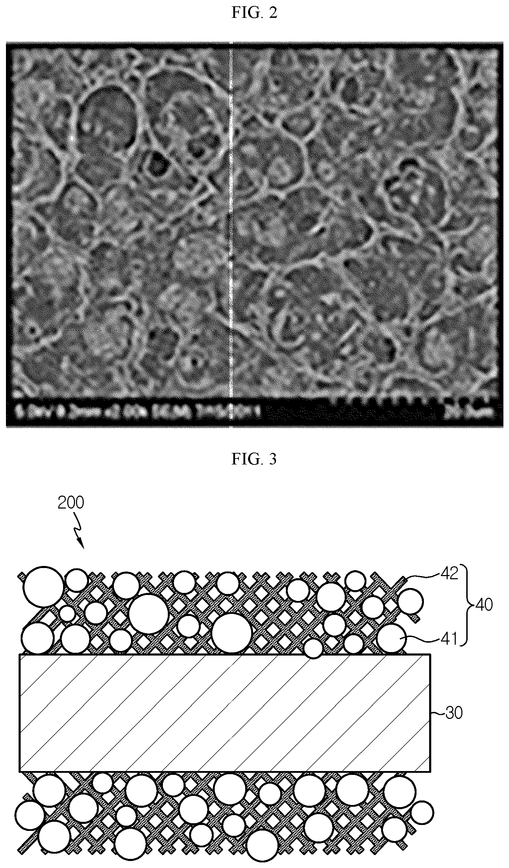

FIG. 1 and FIG. 2 are a schematic view and a scanning electronic microscopic (SEM) image, respectively, illustrating the separator obtained through vapor induced phase separation according to Comparative Example. As can be seen from FIG. 1, the separator obtained through the conventional vapor induced phase separation includes a binder polymer 22, which is disposed predominantly in the surface portion of a porous coating layer 20.

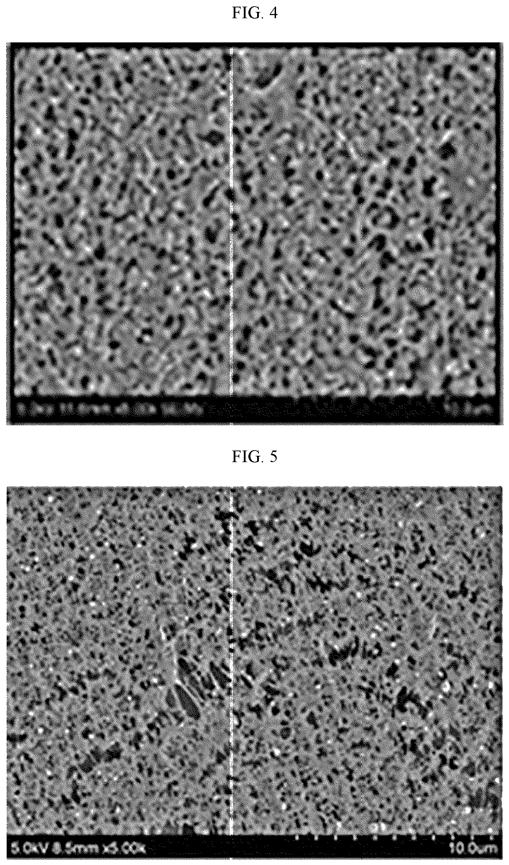

On the other hand, FIG. 3 and FIG. 4 are a schematic view and a SEM image, respectively, illustrating the separator obtained through immersed phase separation according to an embodiment of the present disclosure.

As can be seen from FIG. 3, in the separator according to an embodiment of the present disclosure, a binder polymer 42 forms a matrix structure, and inorganic particles 41 are dispersed in the matrix.

In the separator according to an embodiment of the present disclosure, the content of the inorganic particles in the porous coating layer is 70 parts by weight or more based on 100 parts by weight of the porous coating layer.

According to the conventional immersed phase separation, the content of the inorganic particles in a porous coating layer is about 60 parts by weight based on 100 parts by weight of the porous coating layer. In other words, according to the conventional immersed phase separation, the content of a binder polymer in a porous coating layer is about 40 parts by weight based on 100 parts by weight of the porous coating layer. Thus, the content of the inorganic particles is about 15-20% smaller than the content of the inorganic particles according to the currently used vapor induced phase separation. According to the immersed phase separation, since no separate adhesive layer is formed on the surface of the porous coating layer due to a structural limitation, adhesion to an electrode has been enhanced by increasing the content of the binder polymer relatively. However, in this case, the content of the inorganic particles is reduced as a return service, and thus the separator shows lower quality in terms of heat shrinkage as compared to the conventional vapor induced phase separation.

The inventors of the present disclosure have conducted intensive studies to improve the heat shrinkage of a separator obtained through immersed phase separation by increasing the content of inorganic particles, while providing enhanced adhesion to an electrode.

According to an embodiment of the present disclosure, the content of inorganic particles is 70 parts by weight or more, 71 parts by weight or more, 72 parts by weight or more, 73 parts by wight or more, 74 parts by weight or more, or 75 parts by weight or more, and 95 parts by weight or less, 90 parts by weight or less, or 85 parts by weight or less, based on 100 parts by weight of the porous coating layer. When the content of inorganic particles is less than 70 parts by weight, it is not possible to obtain a desired heat shrinkage. When the content of inorganic particles satisfies the above-defined range, it is possible to obtain a desired heat shrinkage, while ensuring adhesion to an electrode.

According to the present disclosure, there is no particular limitation in the inorganic particles, as long as they are electrochemically stable. In other words, there is no particular limitation in the inorganic particles that may be used herein, as long as they cause no oxidation and/or reduction in the range (e.g. 0-5 V based on Li/Li⁺) of operating voltage of an applicable electrochemical device. Particularly, when using inorganic particles having a high dielectric constant, it is possible to improve the ion conductivity of an electrolyte by increasing the dissociation degree of an electrolyte salt, such as a lithium salt, in a liquid electrolyte.

For the above-mentioned reasons, the inorganic particles may be inorganic particles having a dielectric constant of 5 or more, inorganic particles having lithium-ion transportability or a mixture thereof.

The inorganic particles having a dielectric constant of 5 or more may include any one selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃ (PZT, wherein 0 < x < 1), Pb₁₋ₓLaₓZr_{1-y}Ti_{y}O₃ (PLZT, wherein 0 < x < 1, 0 < y < 1), (1-x)Pb(Mg_{1/3}Nb_{2/3})O₃₋ₓPbTiO₃ (PMN-PT, wherein 0 < x < 1), hafnia (HfO₂), SrTiO₃, SnO₂, CeO₂, MgO, NiO, CaO, ZnO, SiC, or a mixture of two or more of them.

The inorganic particles having lithium-ion transportability may be any one selected from the group consisting of lithium phosphate (Li₃PO₄), lithium titanium phosphate (LiₓTi_{y}(PO₄)₃, 0 < x < 2, 0 < y < 3), lithium aluminum titanium phosphate (LiₓAl_{y}Ti_{z}(PO₄)₃, 0 < x < 2, 0 < y < 1, 0 < z < 3), (LiAlTiP)ₓO_{y}-based glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂-based glass (LiₓSi_{y}S_{z}, 0 < x < 3, 0 < y < 2, 0 < z < 4) and P₂S₅-based glass (LiₓP_{y}S_{z}, 0 < x < 3, 0 < y < 3, 0 < z < 7), or a mixture of two or more of them.

In addition, there is no particular limitation in the average particle diameter of the inorganic particles. However, the inorganic particles preferably have an average particle diameter of 0.001-10 µm in order to form a coating layer with a uniform thickness and to provide suitable porosity. The average particle diameter of the inorganic particles may be preferably 10 nm to 2 µm, more preferably 50 nm to 1 µm.

As used herein, the term 'average particle diameter of the inorganic particles' means a D₅₀ particle diameter, and 'D₅₀ particle diameter' means a particle diameter at a point of 50% in the particle number accumulated distribution depending on particle diameter. The particle diameter may be determined by using a laser diffraction method. Particularly, powder to be analyzed is dispersed in a dispersion medium and introduced to a commercially available laser diffraction particle size analyzer (e.g. Microtrac S3500), and then a difference in diffraction pattern depending on particle size is determined, when particles pass through laser beams, and then particle size distribution is calculated. Then, the particle diameter at a point of 50% of the particle number accumulated distribution depending on particle diameter is calculated to determine D₅₀.

The porous coating layer includes a fluorine-based binder polymer and a polyvinyl acetate binder polymer.

The fluorine-based binder polymer has adhesive property and provides binding force between the porous polymer substrate and the porous coating layer or binding force between the porous coating layer and an electrode. In addition, the fluorine-based binder polymer functions to fix the inorganic particles in the porous coating layer so that they may not be detached.

According to an embodiment of the present disclosure, the fluorine-based binder polymer may include polyvinylidene fluoride, polyvinylidene fluoride-co-hexafluoropropylene, polyvinylidene fluoride-co-trifluoroethylene, polyvinylidene fluoride-co-chlorotrifluoroethylene, polyvinylidene fluoride-co-tetrafluoroethylene, or two or more of them.

According to an embodiment of the present disclosure, the fluorine-based binder polymer may have a weight average molecular weight of 100,000 or more, 200,000 or more, or 300,000 or more, and 1,500,000 or less, 1,000,000 or less, or 800,000 or less. For example, the fluorine-based binder polymer may have a weight average molecular weight of 300,000-800,000 with a view to ensuring heat resistance and adhesive property in combination with processability.

Herein, the weight average molecular weight of the fluorine-based binder polymer is determined by using gel permeation chromatography (GPC) (PL GPC220, Agilent Technologies).

Particularly, the weight average molecular weight of the fluorine-based binder polymer may be determined under the following analysis conditions:
- Column: PL MiniMixed B x 2
- Solvent: DMF
- Flow rate: 0.3 mL/min
- Sample concentration: 2.0 mg/mL
- Injection amount: 10 µL
- Column temperature: 40°C
- Detector: Agilent RI detector
- Standard: Polystyrene (corrected with tertiary function)
- Data processing: ChemStation

In the separator obtained through the conventional immersed phase separation, a porous coating layer containing a fluorine-based binder polymer alone cannot provide sufficient adhesion to an electrode. On the contrary, according to an embodiment of the present disclosure, the fluorine-based binder polymer is used simultaneously with the polyvinyl acetate binder polymer to ensure the adhesion between the separator and an electrode.

In the separator according to an embodiment of the present disclosure, the content of the polyvinyl acetate binder polymer is 30 parts by weight or more and less than 80 parts by weight based on 100 parts by weight of the total content of the binder polymers.

According to an embodiment of the present disclosure, the content of the polyvinyl acetate binder polymer may be 30 parts by weight or more, and 75 parts by weight or less, 70 parts by weight or less, 65 parts by weight or less, 60 parts by weight or less, 55 parts by weight or less, 50 parts by weight or less, 45 parts by weight or less, or 40 parts by weight or less, based on 100 parts by weight of the total content of the binder polymers. When the content of the polyvinyl acetate binder polymer is 80 parts by weight or more, air permeation time is increased excessively as compared to the improvement of adhesion to an electrode, which is not suitable for accomplishing the effects of the present disclosure.

According to an embodiment of the present disclosure, the polyvinyl acetate binder polymer may have a weight average molecular weight of 100,000 or more, 200,000 or more, or 300,000 or more, and 1,000,000 or less, 900,000 or less, or 800,000 or less. For example, the polyvinyl acetate binder polymer may have a weight average molecular weight of 300,000-800,000 with a view to ensuring heat resistance and adhesive property in combination with processability.

Herein, the weight average molecular weight of the polyvinyl acetate binder polymer may be determined by using gel permeation chromatography (GPC) (PL GPC220, Agilent Technologies).

Particularly, the weight average molecular weight of the polyvinyl acetate binder polymer may be determined under the following analysis conditions:
- Column: PL MiniMixed B x 2
- Solvent: DMF
- Flow rate: 0.3 mL/min
- Sample concentration: 2.0 mg/mL
- Injection amount: 10 µL
- Column temperature: 40°C
- Detector: Agilent RI detector
- Standard: Polystyrene (corrected with tertiary function)
- Data processing: ChemStation

Particularly, in the separator according to an embodiment of the present disclosure, the porous polymer substrate may be a porous polymer film substrate or a porous polymer nonwoven web substrate.

The porous polymer film substrate may be a porous polymer film including polyolefin, such as polyethylene or polypropylene. Such a polyolefin porous polymer film substrate realizes a shut-down function at a temperature of 80-150°C.

Herein, the polyolefin porous polymer film may be formed of polymers including polyolefin polymers, such as polyethylene, including high-density polyethylene, linear low-density polyethylene, low-density polyethylene or ultrahigh-molecular weight polyethylene, polypropylene, polybutylene, or polypentene, alone or in combination of two or more of them.

In addition, the porous polymer film substrate may be obtained by molding various polymers, such as polyesters, other than polyolefins, into a film shape. Further, the porous polymer film substrate may have a stacked structure of two or more film layers, wherein each film layer may be formed of polymers including the above-mentioned polymers, such as polyolefins or polyesters, alone or in combination of two or more of them.

In addition, the porous polymer film substrate and porous polymer nonwoven web substrate may be formed of polyethylene terephthalate, polybutylene terephthalate, polyester, polyacetal, polyamide, polycarbonate, polyimide, polyetherether ketone, polyether sulfone, polyphenylene oxide, polyphenylene sulfide, or polyethylene naphthalene, alone or in combination, besides the above-mentioned polyolefins.

Although there is no particular limitation in the thickness of the porous polymer substrate, the porous polymer substrate has a thickness of 1-100 µm, particularly 5-50 µm. In addition, although the pore size and porosity of the porous polymer substrate are not limited particularly, it is preferred that the pore size and porosity are 0.01-50 µm and 20-75%, respectively.

The porosity and pore size of the porous polymer substrate may be determined from scanning electron microscopic (SEM) images, by using a mercury porosimeter or capillary flow porosimeter, or through the BET6-point method based on nitrogen gas adsorption flow using a porosimetry analyzer (e.g. Belsorp-II mini, Bell Japan Inc.).

Although the thickness of the porous coating layer is not particularly limited, it may be 1-15 µm, particularly 1.5-10 µm. In addition, the porosity of the porous coating layer is not particularly limited, but it may be 35-85%, preferably.

The porosity of the porous coating layer may be determined from scanning electron microscopic (SEM) images, by using a mercury porosimeter or capillary flow porosimeter, or through the BET6-point method based on nitrogen gas adsorption flow using a porosimetry analyzer (e.g. Belsorp-II mini, Bell Japan Inc.).

In the porous coating layer, the inorganic particles may be bound to one another by the binder polymer, while they may be packed and be in contact with one another, thereby forming interstitial volumes among the inorganic particles, and the interstitial volumes among the inorganic particles may become vacant spaces to form pores.

In other words, the binder polymer attaches the inorganic particles to one another so that they may retain their binding states. For example, the binder polymer connects the inorganic particles with one another and fixes them. In addition, the pores of the porous coating layer may be those formed by the interstitial volumes among the inorganic particles which become vacant spaces. The spaces may be defined by the inorganic particles facing each other substantially in a closely packed or densely packed structure of the inorganic particles.

The slurry for forming a porous coating layer may further include a dispersant, other additive, besides the inorganic particles and the binder polymers.

The separator for a lithium secondary battery according to an embodiment of the present disclosure may show an adhesion to an electrode (Lami strength) of 23.5 N/m (60 gf/25 mm) or more.

The adhesion between the separator and the electrode may be determined as follows. The separator is stacked with the electrode, and the stack was inserted between PET films having a thickness of 100 µm and adhered with a flat press by heating and pressurizing the stack at 60°C under a pressure of 6.5 MPa for 1 second. The adhered separator and electrode are attached to slide glass by using a double-sided tape. The end portion of the separator is peeled off and attached to a PET film by using a single-sided tape so that they may be connected in the longitudinal direction. Then, the slide glass is mounted to the lower holder of a UTM instrument, and the PET film adhered to the separator is mounted to the upper holder of the UTM instrument. Then, force is applied at 180° and a rate of 300 mm/min. The force required for separating the electrode from the porous coating layer facing the electrode is determined.

The separator for a lithium secondary battery according to an embodiment of the present disclosure may show a heat shrinkage of 10% or less in at least one of the machine direction and the transverse direction.

Herein, the heat shrinkage is a value determined after heating the separator at 150°C for 30 minutes.

The heat shrinkage is calculated according to the formula of [(initial length - length after heat shrinking at 150°C for 30 minutes) / (initial length)] X 100.

In another aspect of the present disclosure, there is provided a method for manufacturing a separator for a lithium secondary battery, including the steps of:
(S1) preparing slurry for forming a porous coating layer including inorganic particles, a fluorine-based binder polymer, a polyvinyl acetate binder polymer and a solvent for the fluorine-based binder polymer;
(S2) applying the slurry for forming a porous coating layer to at least one surface of a porous polymer substrate; and
(S3) dipping the resultant product of step (S2) in a dipping bath containing a non-solvent for the fluorine-based binder polymer to form a porous coating layer,
wherein the content of the inorganic particles is 70 parts by weight or more based on 100 parts by weight of the porous coating layer.

First, prepared is slurry for forming a porous coating layer, including inorganic particles, a fluorine-based binder polymer, a polyvinyl acetate binder polymer and a solvent for the fluorine-based binder polymer (S1).

Reference will be made to the above description about the inorganic particles, the fluorine-based binder polymer and the polyvinyl acetate binder polymer.

Herein, the inorganic particles are dispersed in the solvent, and the fluorine-based binder polymer and the polyvinyl acetate binder polymer are dissolved in the solvent.

According to the present disclosure, the solvent for the slurry for forming a porous coating layer is one capable of dissolving a binder polymer, and particularly, dissolving a binder polymer to 10 wt% or higher at 25°C.

According to an embodiment of the present disclosure, the solvent may include at least one selected from the group consisting of N-methyl-2-pyrrolidone, dimethyl acetamide and dimethyl formamide.

Next, the slurry for forming a porous coating layer is applied to at least one surface of a porous polymer substrate (S2).

The slurry may be applied by using a conventional coating process known to those skilled in the art, such as Meyer bar coating, die coating, reverse roll coating or gravure coating. When the porous coating layer is formed on both surfaces of the porous polymer substrate, the coating solution may be applied to one surface, and then to the other surface, followed by coagulation, washing with water and drying. However, it is preferred to apply the coating solution to both surfaces of the porous polymer substrate at the same time, followed by coagulation, washing with water and drying, in terms of productivity.

Then, the resultant product of step (S2) is dipped in a coagulation solution containing a non-solvent for the fluorinated-binder polymer (S3).

According to the present disclosure, the term 'non-solvent' refers to a solvent capable of dissolving each of the fluorine-based binder polymer and the polyvinyl acetate binder polymer independently to less than 5 wt% at 25°C. In other words, the non-solvent means a solvent which cannot dissolve the binder polymers, and is not particularly limited, as long as it is compatible with the solvent used for facilitating phase separation.

According to an embodiment of the present disclosure, the non-solvent may include at least one selected from water, methanol, ethanol, propyl alcohol, butyl alcohol, butanediol, ethylene glycol, propylene glycol and tripropylene glycol.

Meanwhile, according to an embodiment of the present disclosure, the dipping time may be controlled to 30-100 seconds, or 40-90 seconds. When the dipping times satisfies the above-defined range, it is easier to prevent the problem of detachment of the coating layer caused by excessive phase separation and degradation of adhesion between the porous polymer substrate and the porous coating layer, and to form pores uniformly in the thickness direction.

Step (S3) may be a process of phase separation of the slurry for forming a porous coating layer coated on the porous polymer substrate through the mass interchange between the solvent and the non-solvent.

After step (S3), the method may further include a step of drying the slurry for forming a porous coating layer subjected to phase separation to form a porous coating layer.

The drying may be carried out in a drying chamber, wherein the condition of the drying chamber is not particularly limited due to the application of a non-solvent.

In still another aspect of the present disclosure, there is provided an electrochemical device including a positive electrode, a negative electrode and a separator interposed between the positive electrode and the negative electrode, wherein the separator is the above-described separator according to an embodiment of the present disclosure.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium-ion secondary batteries, lithium polymer secondary batteries or lithium-ion polymer secondary batteries, are preferred.

The two electrodes, positive electrode and negative electrode, used in combination with the separator according to the present disclosure are not particularly limited, and may be obtained by allowing electrode active materials to be bound to an electrode current collector through a method generally known in the art. Among the electrode active materials, non-limiting examples of a positive electrode active material include conventional positive electrode active materials that may be used for the positive electrodes for conventional electrochemical devices. Particularly, lithium manganese oxides, lithium cobalt oxides, lithium nickel oxides, lithium iron oxides or lithium composite oxides containing a combination thereof are used preferably. Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably. Non-limiting examples of a positive electrode current collector include foil made of aluminum, nickel or a combination thereof. Non-limiting examples of a negative electrode current collector include foil made of copper, gold, nickel, copper alloys or a combination thereof.

The electrolyte that may be used in the electrochemical device according to the present disclosure is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent including propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone) or a combination thereof. However, the present disclosure is not limited thereto.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

### MODE FOR DISCLOSURE

Examples will be described more fully hereinafter so that the present disclosure can be understood with ease. These exemplary embodiments are provided so that the present disclosure will be thorough and complete, and will fully convey the scope of the present disclosure to those skilled in the art.

### [Test Example 1]

The following Table 1 shows the results of comparison of the separator obtained according to vapor induced phase separation with the separator obtained according to immersed phase separation.

### Reference Example I

First, Al₂O₃ (AES 11 available from Sumitomo) as inorganic particles was dispersed in N-methyl-2-pyrrolidone as a solvent, and polyvinylidene fluoride-co-hexafluoropropylene (Solef 21510 available from Solvay) as a fluorine-based binder polymer and a polyvinyl acetate binder polymer (available from Sigma Aldrich) were dissolved therein to prepare slurry for forming a porous coating layer. Herein, the weight ratio of the inorganic particles : fluorine-based binder polymer : polyvinyl acetate binder polymer was 70 : 25 : 5.

The prepared slurry for forming a porous coating layer was applied to one surface of a polyethylene-based porous polymer substrate (WL11B available from W scope, air permeation time 150 sec/100 cc) having a thickness of 9 µm by using a doctor blade. The slurry was applied at a temperature of 15°C.

Then, the resultant product was dipped in a coagulation solution containing water as a non-solvent. After that, the resultant product was dried in an oven as a drying furnace at a temperature of 75°C to finish a separator for an electrochemical device. The test results are shown in the following Table 1.

### Comparative Example I

First, polyvinylidene fluoride-co-hexafluoropropylene (Solef 21510 available from Solvay) as a fluorine-based binder polymer was introduced to acetone as a solvent and dissolved therein at 50°C for about 4 hours to prepare a binder polymer solution. Next, Al₂O₃ (AES 11 available from Sumitomo) as inorganic particles was introduced to the resultant binder polymer solution, and the inorganic particles were pulverized and dispersed by using a ball milling process for 12 hours to prepare slurry for forming a porous coating layer. Herein, the weight ratio of the inorganic particles : fluorine-based binder polymer was 70 : 30.

The slurry for forming a porous coating layer was applied to both surfaces of a polyethylene porous film (porosity: 45%) having a thickness of 9 µm through a dip coating process at 23°C under a relative humidity of 40% to a total loading amount of 13.5 g/m², followed by drying, to obtain a separator having porous coating layers. The test results are shown in the following Table 1.

### Comparative Example II

First, polyvinylidene fluoride-co-hexafluoropropylene (Solef 21510 available from Solvay) as a fluorine-based binder polymer and a polyvinyl acetate binder polymer (available from Sigma Aldrich) were introduced to acetone as a solvent and dissolved therein at 50°C for about 4 hours to prepare a binder polymer solution. Next, Al₂O₃ (AES 11 available from Sumitomo) as inorganic particles was introduced to the resultant binder polymer solution, and the inorganic particles were pulverized and dispersed by using a ball milling process for 12 hours to prepare slurry for forming a porous coating layer. Herein, the weight ratio of the inorganic particles : fluorine-based binder polymer : polyvinyl acetate binder polymer was 70 : 25 : 5.

The slurry for forming a porous coating layer was applied to both surfaces of a polyethylene porous film (porosity: 45%) having a thickness of 9 µm through a dip coating process at 23°C under a relative humidity of 40% to a total loading amount of 13.5 g/m², followed by drying, to obtain a separator having porous coating layers. The test results are shown in the following Table 1.

**[Table 1]**

| | | Weight ratio of inorganic particles : fluorine-based binder polymer : polyvinyl acetate binder polymer (%) | Pore blocking degree of porous polymer substrate before coating (ohm) | Pore blocking degree of porous polymer substrate after coating (ohm) | Pore blocking degree of porous polymer substrate after removal of porous coating layer (ohm) | Pore blocking degree of porous polymer substrate after removal of porous coating layer and washing (ohm) |
|---|---|---|---|---|---|---|
| Ref. Ex. I | Immersed phase separation | 70 : 25 : 5 | 0.54 | 0.84 | 0.79 | 0.53 |
| Comp. Ex. I | Vapor induced phase separation | 70 : 30 : 0 | 0.54 | 1.15 | 1.17 | 0.57 |
| Comp. Ex. II | Vapor induced phase separation | 70 : 25 : 5 | 0.54 | 1.17 | 1.15 | 0.55 |

As can be seen from Table 1, the separator according to Reference Example I shows a decrease in degree of blocking of the pores in the porous polymer substrate after removal of the coating layer and washing. On the contrary, when forming the porous coating layer through vapor induced phase separation according to Comparative Examples I and II, the pore blocking degree is increased by 100% or more after coating. In addition, when forming the porous coating layer through vapor induced phase separation according to Comparative Example I, it can be seen that the degree of blocking of the pores in the porous polymer substrate after removal of the coating layer and washing is increased by 7.5% as compared to the result of Reference Example I. Further, when forming the porous coating layer by using the same composition through vapor induced phase separation according to Comparative Example II, it can be seen that the degree of blocking of the pores in the porous polymer substrate after removal of the coating layer and washing is increased by 4% as compared to the result of Reference Example I.

### [Test Example 2]

The following Table 2 shows the results of comparison of the separators obtained according to the conventional vapor induced phase separation and conventional immersed phase separation with the separator according to an embodiment of the present disclosure.

### Reference Example III and Examples II and IV-V

A separator was obtained in the same manner as Reference Example I, except that the composition of the slurry for forming a porous coating layer was controlled as shown in the following Table 2.

### Comparative Examples III-V

A separator was obtained in the same manner as Reference Example I, except that the composition of the slurry for forming a porous coating layer was controlled as shown in the following Table 2.

**[Table 2]**

| | Pore forming process | Weight ratio of inorganic particles : fluorine-based binder polymer : polyvinyl acetate binder polymer (%) | Pore blocking degree of porous polymer substrate (ER) (ohm) | Heat shrinkage (%) (TD/MD) | Lami strength |
|---|---|---|---|---|---|
| **Comp. Ex. I** | Vapor induced phase separation | 70 : 30 : 0 | **1.15** | 3/4 | 35.3 N/m (90 gf/25 mm) |
| Comp. Ex. III | Immersed phase separation | 60 : 40 : 0 | 0.63 | **12/15** | 33.3 N/m (85 gf/25 mm) |
| **Comp. Ex. IV** | **Immersed phase separation** | **70 : 30 : 0** | **0.65** | **10/12** | **21.6 N/m (55 gf/25 mm)** |
| Comp. Ex. V | Immersed phase separation | 90 : 10 : 0 | 0.58 | 3/3.5 | **3.92 N/m (10 gf/25 mm)** |
| Ref. Ex. I | Immersed phase separation | 70 : 25 : 5 | 0.69 | 11/10 | 29.4 N/m (75 gf/25 mm) |
| Ex. II | Immersed phase separation | 70 : 20 : 10 | 0.75 | 9/12 | 37.3 N/m (95 gf/25 mm) |
| Ref. Ex. III | Immersed phase separation | 80 : 15 : 5 | 0.59 | 1/2 | 27.5 N/m (70 gf/25 mm) |
| Ex. IV | Immersed phase separation | 70 : 15 : 15 | 0.69 | 10/11 | 43.2 N/m (110 gf/25 mm) |
| Ex. V | Immersed phase separation | 75 : 25 : 10 | 0.62 | 2.5/3 | 35.3 N/m (90 gf/25 mm) |

Comparative Example I is a separator obtained according to the conventional vapor induced phase separation. As can be seen from Table 2, Comparative Example I has an advantage in terms of heat shrinkage as compared to immersed phase separation. In addition, Comparative Examples I shows a high adhesion to an electrode of 35.3 N/m (90 gf/25 mm). However, it shows a high degree of blocking of the pores of the porous polymer substrate of 1.15 ohm, and such a high resistance is problematic.

Comparative Examples III-V relate to separators obtained according to the conventional immersed phase separation. According to the conventional immersed phase separation, the content of inorganic particles is about 60 parts by weight based on 100 parts by weight of a porous coating layer. According to the immersed phase separation, no separate adhesive layer is formed on the surface of a porous coating layer due to a structural limitation. Thus, in this case, adhesion to an electrode has been enhanced by increasing the content of a binder polymer relatively. This can be seen from Table 2. On the contrary, Comparative Example III shows a heat shrinkage of 12/15, which is worse as compared to the separator of Comparative Example I obtained according to vapor induced phase separation.

When the inorganic particles and binder polymer are used at a weight ratio of 70 : 30 according to Comparative Example IV, the separator still provides lower results in terms of adhesion and heat shrinkage as compared to the separator of Comparative Example I obtained according to vapor induced phase separation. Rather, the separator shows significantly decreased adhesion as compared to Comparative Example III and cannot provide any significant effect in terms of heat shrinkage.

When the inorganic particles and binder polymer are used at a weight ratio of 90 : 10 according to Comparative Example V, the separator provides a heat shrinkage equivalent or similar to the heat shrinkage of Comparative Example I, but shows significant degradation in terms of adhesion to an electrode.

On the contrary, as can be seen from Table 2, Reference Examples 1 and III and Examples II and IV-V according to the present disclosure show a degree of blocking of the pores of the porous polymer substrate of 1.0 ohm or less, a heat shrinkage of 10% or less in at least one of the transverse direction (TD)/mechanical direction (MD), and an adhesion to an electrode of 23.5 N/m (60 gf/25 mm) or more, and thus can accomplish the effects of the present disclosure.

### [Test Example 3]

Test Example 3 is carried out to determine a difference in adhesion depending on the content of a fluorine-based binder polymer and that of polyvinyl acetate binder polymer. For this purpose, the test was carried out by using no inorganic particles.

### Reference Example A

First, polyvinylidene fluoride-co-hexafluoropropylene (Solef 21510 available from Solvay) as a fluorine-based binder polymer and a polyvinyl acetate binder polymer (available from Sigma Aldrich) were dissolved in N-methyl-2-pyrrolidone as a solvent to prepare slurry for forming a porous coating layer. Herein, the weight ratio of the fluorine-based binder polymer to polyvinyl acetate binder polymer was 95 : 5.

The prepared slurry for forming a porous coating layer was applied to one surface of a polyethylene-based porous polymer substrate (WL11B available from W scope, air permeation time 150 sec/100 cc) having a thickness of 9 µm by using a doctor blade. The slurry was applied at a temperature of 15°C.

Then, the resultant product was dipped in a coagulation solution containing water as a non-solvent. After that, the resultant product was dried in an oven as a drying furnace at a temperature of 75°C to finish a separator for an electrochemical device. The test results of Reference Example A are shown in the following Table 3.

### Reference Example B and Examples C-D

A separator was obtained in the same manner as Reference Example A, except that the weight ratio of the fluorine-based binder polymer to the polyvinyl acetate binder polymer was controlled as shown in the following Table 3.

### Comparative Examples A and B

A separator was obtained in the same manner as Reference Example A, except that the weight ratio of the fluorine-based binder polymer to the polyvinyl acetate binder polymer was controlled as shown in the following Table 3.

**[Table 3]**

| | Comp. Ex. A | Ref. Ex. A | Ref. Ex. B | Ex. C | Ex. D | Comp. Ex. B |
|---|---|---|---|---|---|---|
| PVdf-HFP | 100 | 95 | 80 | 50 | 25 | 20 |
| PVAc | 0 | 5 | 20 | 50 | 75 | 80 |
| Air permeation time (sec/100 mL) | 125 | 128 | 134 | 148 | 357 | 1549 |
| Increase in air permeation time as compared to Comp. Ex. A (%) | 0% | 2.4% | 7.2% | 18.4% | 185.6% | 1139.2% |
| Adhesion to electrode | 37.3 N/m (95 gf/25 mm) | 51.0 N/m (130 gf/25 mm) | 52.6 N/m (134 gf/25 mm) | 69.0 N/m (176 gf/25 mm) | 69.8 N/m (178 gf/25 mm) | 69.8 N/m (178 gf/25 mm) |
| Increase in adhesion to electrode as compared to Comp. Ex. A (%) | **0%** | 36.84% | 41.05% | 85.26% | 87.37% | 87.37% |

In Table 3, in the case of Comparative Example B, the separator shows a lower increase in adhesion to an electrode as compared to the increase in air permeation time, and thus cannot be expected to accomplish the effects of the present disclosure. Meanwhile, in the case of Comparative Example A, the separator cannot accomplish a desired level of increase in adhesion to an electrode.

### [Test Example 4]

Test Example 4 includes Example and Comparative Examples using any other binder polymer than a polyvinyl acetate binder polymer.

### Example 1

A separator was obtained in the same manner as Example II. The test results are shown in the following Table 4.

### Comparative Example 1

A separator was obtained in the same manner as Example 1, except that a polymethyl methacrylate (PMMA) binder polymer was used instead of the polyvinyl acetate binder polymer. The test results are shown in the following Table 4.

### Comparative Example 2

A separator was obtained in the same manner as Example 1, except that a polyamide binder polymer was used instead of the polyvinyl acetate binder polymer. The test results are shown in the following Table 4.

### Comparative Example 3

A separator was obtained in the same manner as Example 1, except that a polyacrylate binder polymer was used instead of the polyvinyl acetate binder polymer. The test results are shown in the following Table 4.

**[Table 4]**

| | Pore forming process | Binder polymer | Degree of blocking of porous polymer substrate (ohm) | Heat shrinkage (%) (TD/MD) | Lami strength |
|---|---|---|---|---|---|
| Ex. 1 = Ex. II | Immersed phase separation | Polyvinyl acetate | 0.75 | 9/12 | 37.3 N/m (95 gf/25 mm) |
| Comp. Ex. 1 | Immersed phase separation | PMMA | **1.1** | **15/17** | 39.2 N/m (100 gf/25 mm) |
| Comp. Ex. 2 | Immersed phase separation | Polyamide | 0.63 | 3/3 | **11.8 N/m (30 gf/25 mm)** |
| Comp. Ex. 3 | Immersed phase separation | Polyacrylate | **1.23** | 13/15 | 33.3 N/m (85 gf/25 mm) |

As can be seen from Table 4, when using polyamide, polymethyl methacrylate or polyacrylate as a binder polymer, instead of a polyvinyl acetate binder polymer, it is difficult to satisfy a degree of blocking of a porous polymer substrate, heat shrinkage and adhesion to an electrode at the same time.

### Test Methods

### 1) Method for Determining Pore Blocking Degree of Porous Polymer Substrate

The porous coating layer in a separator was removed by using a cellophane tape (2M cat. 810D) twice to three times, and cut into a diameter of 19π. The prepared separator was introduced to a CR2610 coin cell, and an electrolyte including 1 M lithium hexafluorophosphate (LiPF₆) dissolved in ethylene carbonate/propylene carbonate/diethyl carbonate (EC/PC/DEC = 30:20:50 wt%) was injected thereto to obtain a coin cell. The alternating current (AC) resistance of the coin cell was measured. The results are shown in the above Table 1. Herein, the AC resistance was a resistance value measured at 1 KHz by using electrochemical impedance spectroscopy (EIS) (available from Ametek), and expressed as an average value of 5 measurements.

### 2) Method for Determining Heat Shrinkage

The heat shrinkage was calculated according to the formula of [(initial length - length after heat shrinking at 150°C for 30 minutes) / (initial length)] X 100.

### 3) Method for Determination of Adhesion (Lami Strength) between Electrode and Separator

To determine the adhesion (Lami strength) between an electrode and a separator, a negative electrode was prepared as follows.

First, artificial graphite, carbon black, carboxymethyl cellulose (CMC) and styrene butadiene rubber (SBR) were mixed at a weight ratio of 96 : 1 : 2 : 2 with water to prepare negative electrode slurry. The negative electrode slurry was applied to copper foil at a capacity of 3.5 mAh/cm² and dried at 135°C for 3 hours or more, followed by pressing, to obtain a negative electrode.

The resultant negative electrode was cut into a size of 25 mm x 100 mm. In addition, each of the separators obtained according to Examples and Comparative Examples was cut into a size of 25 mm x 100 mm. The separator was stacked with the negative electrode, and the stack was inserted between PET films having a thickness of 100 µm and adhered by using a flat press. Herein, the flat press was heated and pressurized at 60°C under a pressure of 6.5 MPa for 1 second. The adhered separator and negative electrode were attached to slide glass by using a double-sided tape. The end portion (10 mm or less from the end of the adhered surface) of the separator was peeled off and attached to a 25 mm x 100 mm PET film by using a single-sided tape so that they might be connected in the longitudinal direction. Then, the slide glass was mounted to the lower holder of a UTM instrument (LLOYD Instrument LF Plus), and the PET film adhered to the separator was mounted to the upper holder of the UTM instrument. Then, force was applied at 180° and a rate of 300 mm/min. The force required for separating the negative electrode from the porous coating layer facing the negative electrode was measured.

## Claims

1. A separator for a lithium secondary battery, comprising:
a porous polymer substrate; and
a porous coating layer formed on at least one surface of the porous polymer substrate, and comprising inorganic particles, a fluorine-based binder polymer and a polyvinyl acetate (PVAc) binder polymer,
wherein the porous coating layer has a structure in which the inorganic particles are dispersed in a matrix formed by the fluorine-based binder polymer and the polyvinyl acetate binder polymer, and the fluorine-based binder polymer, the polyvinyl acetate binder polymer and the inorganic particles are distributed homogeneously in the thickness direction of the porous coating layer,
the content of the inorganic particles is 70 parts by weight or more based on 100 parts by weight of the porous coating layer, and
the content of the polyvinyl acetate binder polymer is 30 parts by weight or more and less than 80 parts by weight based on 100 parts by weight of the total content of the binder polymers.

2. A separator for a lithium secondary battery, comprising:
a porous polymer substrate; and
a porous coating layer formed on at least one surface of the porous polymer substrate, and comprising inorganic particles, a fluorine-based binder polymer and a polyvinyl acetate (PVAc) binder polymer,
wherein the pores in the porous coating layer are formed by mass interchange between a solvent and a non-solvent for the binder polymers,
the content of the inorganic particles is 70 parts by weight or more based on 100 parts by weight of the porous coating layer, and
the content of the polyvinyl acetate binder polymer is 30 parts by weight or more and less than 80 parts by weight based on 100 parts by weight of the total content of the binder polymers.

3. The separator for a lithium secondary battery according to claim 1 or 2, wherein the content of the polyvinyl acetate binder polymer is 30-75 parts by weight based on 100 parts by weight of the total content of the binder polymers.

4. The separator for a lithium secondary battery according to claim 2, wherein the solvent comprises at least one selected from N-methyl-2-pyrrolidone, dimethyl acetamide and dimethyl formamide.

5. The separator for a lithium secondary battery according to claim 2, wherein the non-solvent is water.

6. The separator for a lithium secondary battery according to claim 1 or 2, wherein the fluorine-based binder polymer has a weight average molecular weight of 100,000-1,500,000, determined by gel permeation chromatography (GPC).

7. The separator for a lithium secondary battery according to claim 1 or 2, wherein the polyvinyl acetate binder polymer has a weight average molecular weight of 100,000-1,000,000, determined by gel permeation chromatography (GPC).

8. The separator for a lithium secondary battery according to claim 1 or 2, which shows an adhesion to an electrode (Lami strength) of 23.5 N/m (60 gf/25 mm) or more, determined as set out in the description.

9. The separator for a lithium secondary battery according to claim 1 or 2, which shows a heat shrinkage of 10% or less in at least one of the machine direction and the transverse direction, as determined after heating the separator at 150°C for 30 minutes as set out in the description.

10. An electrochemical device comprising a positive electrode, a negative electrode and a separator interposed between the negative electrode and the positive electrode, wherein the separator is the same as defined in claim 1 or 2.

11. The electrochemical device according to claim 10, which is a lithium secondary battery.

## Patentansprüche

1. Separator für eine Lithium-Sekundärbatterie, umfassend
ein poröses Polymersubstrat; und
eine poröse Beschichtungsschicht, die auf mindestens einer Oberfläche des porösen Polymersubstrats ausgebildet ist und anorganische Teilchen, ein Bindemittelpolymer auf Fluorbasis und ein Polyvinylacetat (PVAc)-Bindemittelpolymer umfasst,
wobei die poröse Beschichtungsschicht eine Struktur aufweist, in der die anorganischen Teilchen in einer Matrix dispergiert sind, die durch das Bindemittelpolymer auf Fluorbasis und das Polyvinylacetat-Bindemittelpolymer gebildet wird, und das Bindemittelpolymer auf Fluorbasis, das Polyvinylacetat-Bindemittelpolymer und die anorganischen Teilchen homogen in der Dickenrichtung der porösen Beschichtungsschicht verteilt sind,
der Gehalt an anorganischen Teilchen 70 Gewichtsteile oder mehr, bezogen auf 100 Gewichtsteile der porösen Beschichtungsschicht, beträgt, und
der Gehalt an Polyvinylacetat-Bindemittelpolymer 30 Gewichtsteile oder mehr und weniger als 80 Gewichtsteile, bezogen auf 100 Gewichtsteile des Gesamtgehalts der Bindemittelpolymere, beträgt.

2. Separator für eine Lithium-Sekundärbatterie, umfassend
ein poröses Polymersubstrat; und
eine poröse Beschichtungsschicht, die auf mindestens einer Oberfläche des porösen Polymersubstrats ausgebildet ist und anorganische Teilchen, ein Bindemittelpolymer auf Fluorbasis und ein Polyvinylacetat (PVAc)-Bindemittelpolymer umfasst,
wobei die Poren in der porösen Beschichtungsschicht durch Massenaustausch zwischen einem Lösungsmittel und einem Nichtlösungsmittel für die Bindemittelpolymere gebildet werden,
der Gehalt an anorganischen Teilchen 70 Gewichtsteile oder mehr, bezogen auf 100 Gewichtsteile der porösen Beschichtungsschicht, beträgt, und
der Gehalt an Polyvinylacetat-Bindemittelpolymer 30 Gewichtsteile oder mehr und weniger als 80 Gewichtsteile, bezogen auf 100 Gewichtsteile des Gesamtgehalts der Bindemittelpolymere, beträgt.

3. Separator für eine Lithium-Sekundärbatterie gemäß Anspruch 1 oder 2, wobei der Gehalt an Polyvinylacetat-Bindemittelpolymer 30 bis 75 Gewichtsteile, bezogen auf 100 Gewichtsteile des Gesamtgehalts der Bindemittelpolymere, beträgt.

4. Separator für eine Lithium-Sekundärbatterie gemäß Anspruch 2, wobei das Lösungsmittel mindestens eines umfasst, das ausgewählt ist aus N-Methyl-2-pyrrolidon, Dimethylacetamid und Dimethylformamid.

5. Separator für eine Lithium-Sekundärbatterie gemäß Anspruch 2, wobei das Nichtlösungsmittel Wasser ist.

6. Separator für eine Lithium-Sekundärbatterie gemäß Anspruch 1 oder 2, wobei das Bindemittelpolymer auf Fluorbasis ein gewichtsmittleres Molekulargewicht von 100.000-1.500.000 aufweist, bestimmt durch Gelpermeationschromatographie (GPC).

7. Separator für eine Lithium-Sekundärbatterie gemäß Anspruch 1 oder 2, wobei das Polyvinylacetat-Bindemittelpolymer ein gewichtsmittleres Molekulargewicht von 100.000-1.000.000 aufweist, bestimmt durch Gelpermeationschromatographie (GPC).

8. Separator für eine Lithium-Sekundärbatterie gemäß Anspruch 1 oder 2, der eine Haftung an einer Elektrode (Laminierungsfestigkeit) von 23,5 N/m (60 gf/25 mm) oder mehr aufweist, bestimmt wie in der Beschreibung beschrieben.

9. Separator für eine Lithium-Sekundärbatterie gemäß Anspruch 1 oder 2, der eine Wärmeschrumpfung von 10 % oder weniger in mindestens einer der Maschinenrichtung und der Querrichtung aufweist, bestimmt nach 30-minütigem Erwärmen des Separators auf 150 °C, wie in der Beschreibung beschrieben.

10. Elektrochemische Vorrichtung, umfassend eine positive Elektrode, eine negative Elektrode und einen zwischen der negativen Elektrode und der positiven Elektrode angeordneten Separator, wobei der Separator der gleiche ist, wie in Anspruch 1 oder 2 definiert.

11. Elektrochemische Vorrichtung gemäß Anspruch 10, die eine Lithium-Sekundärbatterie ist.

## Revendications

1. Séparateur pour une batterie secondaire au lithium, comprenant :
un substrat polymère poreux ; et
une couche de revêtement poreuse formée sur au moins une surface du substrat polymère poreux, et comprenant des particules inorganiques, un polymère liant à base de fluor et un polymère liant à base d'acétate de polyvinyle (PVAc),
dans lequel la couche de revêtement poreuse présente une structure dans laquelle les particules inorganiques sont dispersées dans une matrice formée par le polymère liant à base de fluor et le polymère liant à base d'acétate de polyvinyle, et le polymère liant à base de fluor, le polymère liant à base d'acétate de polyvinyle et les particules inorganiques sont répartis de manière homogène dans la direction d'épaisseur de la couche de revêtement poreuse,
la teneur des particules inorganiques est de 70 parties en poids ou plus sur la base de 100 parties en poids de la couche de revêtement poreux, et
la teneur du polymère liant à base d'acétate de polyvinyle est de 30 parties en poids ou plus et inférieure à 80 parties en poids sur la base de 100 parties en poids de la teneur totale des polymères liants.

2. Séparateur pour une batterie secondaire au lithium, comprenant :
un substrat polymère poreux ; et
une couche de revêtement poreuse formée sur au moins une surface du substrat polymère poreux, et comprenant des particules inorganiques, un polymère liant à base de fluor et un polymère liant à base d'acétate de polyvinyle (PVAc),
dans lequel les pores se situant dans la couche de revêtement poreuse sont formés par échange de masse entre un solvant et un non-solvant pour les polymères liants,
la teneur des particules inorganiques est de 70 parties en poids ou plus sur la base de 100 parties en poids de la couche de revêtement poreux, et
la teneur du polymère liant à base d'acétate de polyvinyle est de 30 parties en poids ou plus et inférieure à 80 parties en poids sur la base de 100 parties en poids de la teneur totale des polymères liants.

3. Séparateur pour une batterie secondaire au lithium selon la revendication 1 ou la revendication 2, dans lequel la teneur du polymère liant à base d'acétate de polyvinyle est de 30 à 75 parties en poids sur la base de 100 parties en poids de la teneur totale des polymères liants.

4. Séparateur pour une batterie secondaire au lithium selon la revendication 2, dans lequel le solvant comprend au moins un sélectionné parmi du N-méthyl-2-pyrrolidone, du diméthylacétamide et du diméthyl formamide.

5. Séparateur pour une batterie secondaire au lithium selon la revendication 2, dans lequel le non-solvant est de l'eau.

6. Séparateur pour une batterie secondaire au lithium selon la revendication 1 ou la revendication 2, dans lequel le polymère liant à base de fluor présente un poids moléculaire moyen en poids de 100 000 à 1 500 000, déterminé par chromatographie par perméation au gel (GPC).

7. Séparateur pour une batterie secondaire au lithium selon la revendication 1 ou la revendication 2, dans lequel le polymère liant à base d'acétate de polyvinyle présente un poids moléculaire moyen en poids de 100 000 à 1 000 000, déterminé par chromatographie par perméation au gel (GPC).

8. Séparateur pour une batterie secondaire au lithium selon la revendication 1 ou la revendication 2, qui montre une adhérence à une électrode (résistance Lami) de 23,5 N/m (60 gf/25 mm) ou plus, déterminée comme indiqué dans la description.

9. Séparateur pour une batterie secondaire au lithium selon la revendication 1 ou la revendication 2, qui montre un retrait thermique de 10 % ou moins dans au moins l'une parmi la direction machine et la direction transversale, tel que déterminé après chauffage du séparateur à 150 °C pendant 30 minutes comme indiqué dans la description.

10. Dispositif électrochimique comprenant une électrode positive, une électrode négative et un séparateur interposé entre l'électrode positive et l'électrode négative, dans lequel le séparateur est identique à celui défini selon la revendication 1 ou la revendication 2.

11. Dispositif électrochimique selon la revendication 10, qui est une batterie secondaire au lithium.
